**Europäisches Patentamt**

**European Patent Office**

**Office européen des brevets**

(19)

(11) Publication number : **0 585 174 A1**

(12) **EUROPEAN PATENT APPLICATION**

(21) Application number : **93402093.4**

(22) Date of filing : **25.08.93**

(51) Int. Cl.⁵ : **B01D 53/26**

(30) Priority : **26.08.92 IL 102955**

(43) Date of publication of application :
**02.03.94 Bulletin 94/09**

(84) Designated Contracting States :
**DE ES FR GB IT**

(71) Applicant : **Lavie, Ram**
**33 Italia Street**
**Haifa (IL)**

(71) Applicant : **Technion Research &**
**Development Foundation Ltd.**
**Technion City**
**Haifa 32000 (IL)**

(72) Inventor : **Lavie, Ram**
**33 Italia Street**
**Haifa (IL)**

(74) Representative : **Portal, Gérard et al**
**Cabinet Beau de Loménie 158, rue de**
**l'Université**
**F-75340 Paris Cédex 07 (FR)**

(54) **Apparatus for a rapid drying of compressed air.**

(57)   The invention relates to an improved apparatus for a rapid drying a compressed air using the Heat-Mass-Exchange (**HME**) system. According to the invention, the oil entrapped in the stream of compressed air is removed by adsorption over a catalyst folowed by passing the hot, oil-free gas through a HME system. The HME system consists of a pair of adsorption/desorption beds, containing a desiccant, wherein cooling and condensation of the moisture occur. The desiccant is selected from various compounds such as active carbon, silica gel, alumina, molecular sieves or any mixture thereof. Preferably, the oil-free air is preheated prior to its entering in the HME system. An alternative method for the removal of said oil is by a catalytic combustion unit. In this case, the ignition temperature is in the range of between 120° to 200°C, the heat of combustion being utilized to preheat the air which enter in the catalytic combustion unit.

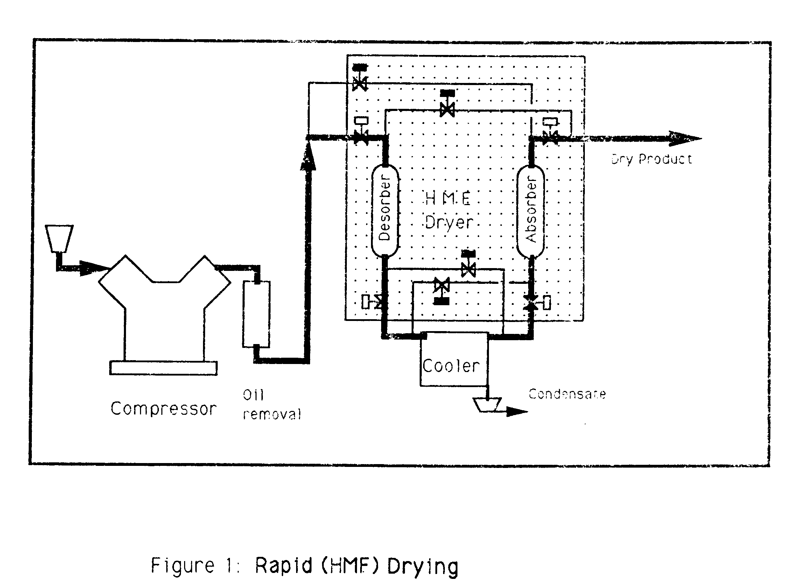

Figure 1 : Rapid (HME) Drying

EP 0 585 174 A1

The present invention relates to an apparatus for drying a gas. More particularly, the invention relates to an apparatus for drying air, using the Heat-Mass-Exchange (HME) concept.

## BACKGROUND OF THE INVENTION

The drying of a gas is widely used in many chemical processes. There are many cases in industry, when two streams of similar compositions and of different temperatures are available and it is beneficial to exchange heat between these two streams.It would be also most desirable to have a mass transfer, wherein some components will be transferred from a stream which is relatively dilute in the particular component to the other stream that is relatively concentrated in the same component. Typical examples of these cases are in the manufacture of ammonia or in the separation of oxygen from air. In our previous U.S. Patent number 4,661,133 this new method for Heat and Mass Exchange (HME) was described.

A particular use of the above HME concept was mentioned for air drying, wherein heating and drying occur. There are two main specific advantages of the HME concept for this use:
- economic,in view of the minimal equipment required and its small size, as well as low energy consumption and relatively low costs of installation and operation, and
- simplicity of the operation.

The dry air obtained using this concept, has a dew point which is comparable to or even better than that obtained by refrigeration dryers, but the process is less expensive.

As mentioned in our above U.S. patent, the conventional air drying process comprises the following isothermal steps:

(a) compression; (b) cooling; (c) separation of the condensed humidity and (d) drying in an adsorption battery which is mostly periodically regenerated thermally by an external power source or by self purging. This method uses adiabatic adsorption and it differs basically from the conventional TSA system in configuration, desiccant bed design and size, as well as in the mode of operation. The cooling and condensation, adsorption and regeneration, are all reordered as compared to the conventional TSA system. It requires relatively small desiccant beds that are thermally insulated from their pressure enclosure to minimize heat losses to the surrounding. The roles of the beds are alternated very frequently as compared to common TSA systems. The energy driving the gas drying process is essentially invested in the regeneration of the desiccant, and is derived here mostly from the inevitable heat of compression, which in conventional systems, must be dissipated to the environment. Thus, the use of HME drying, exploits in a beneficial manner internal sources of energy and minimizes, or even avoids, the use of externally supplied energy.

In case of compressed air, there is a problem which is encountered and might jeopardise the advantages of the HME for air drying. As known, the compression of air is often carried out by means of an oil lubricated compressor, which causes that some oil vapors will be entrained with the gas at the compressor discharge. The amount of oil thus entrained is related to the oil vapour pressure, and accordingly to the temperature of the compression. Thus, the higher the temperature, the higher will be the vapour pressure of oil and as a consequence, more oil will be entrained. Generally, the oil content in the compressed gas will be between 0.01% to 0.1% by volume, depending on the compressor discharge temperature and the type of lubricant oil used. These amounts of oil may impede the smooth operation of air drying by the HME concept.

It is an object of the present invention to provide an apparatus for a rapid drying of compressed air. It is another object of the present invention to provide an apparatus for a rapid drying of compressed air containing small amounts of entrained oil.

## BRIEF DESCRIPTION OF THE INVENTION

The invention consists in an apparatus for a rapid drying of compressed air, which comprises the steps of: (a) removal of the oil entrained in the stream of compressed gas, and (b) passing the stream of hot oil-free air through a HME system consisting of a pair of adsorption/desorption beds, wherein cooling and condensation of the moisture occur, thus obtaining a substantially dry stream of air. The removal of the oil may be carried out either by adsorption using a suitable adsorbing material such as active carbon or activated alumina, or by catalytic combustion of the oil in the stream of compressed gas. Of course, the first step will not be required in case that the stream of compressed gas, does not contain any oil, being replaced by a prior heating of said compressed gas.

## DETAILED DESCRIPTION OF THE INVENTION

Figure 1 illustrates schematically the apparatus according to the present invention. As can be noticed, the

EP 0 585 174 A1

apparatus comprises two main units:

(1) oil removal from the air stream going out from the compressor, and

(2) drying of the oil-free stream by a HME system.

The proper method for the oil removal, will be selected according to the amount of oil entrained in the stream of compressed air. When operating at conditions yielding an oil content in the lower range of 0.01%, the oil can be removed by means of a small bed of adsorbent consisting of a suitable adsorbing material such as active carbon or active alumina, the bed being replaced periodically. When the oil content in the compressed gas is in the upper range of 0.1% and contains sufficient oxygen, such as is generally the case, the oil is best removed by its catalytic combustion. The minimum ignition temperature will be normally in the range of 120 to about 200°C. In some cases one may need to preheat the feed to the catalyticbed at start-up. Once ignited, the heat of combustion can be used to preheat the air entering the catalyst, thus maintaining said combustion without any further external addition of heat, while providing also an effluent which is sufficiently hot to serve as a regeneration gas for the rapid HME dryer battery. In the following Table 1, there are summarized,the results of a typical composition of the entering compressed air containing a paraffin oil ($C_{14}$) and its composition after the catalytic combustion.

**Table 1: Compositions of compressed air (% by volume) before (in) and after (out) combustion.**

| | $N_2$* | $O_2$ | $H_2O$ | $CO_2$ | Oil | T°C |
|---|---|---|---|---|---|---|
| In : | 77.11 | 20.37 | 2.44. | 0.03 | 0.05 | 120 |
| Out: | 76.86 | 19.24 | 3.18 | 0.73 | 0.00 | 320 |

(* including inert gases)

As can be noticed, after the combustion, the oil content was completely removed, with an increase in the carbon dioxide and water content, and a corresponding decrease in the oxygen content and increase in the temperature of the outgoing air.

In the second step, the oil-free stream of air is passed over a HME drying unit consisting of two or more small desiccant beds that alternate in the roles of adsorber-desorber, by means of automatic valves. The material in the desiccant bed may be selected from known compounds such as: active carbon, silica gel, alumina, molecular sieves or any mixture thereof. There are cases when it is most beneficial to slightly preheat the gas prior to its feeding to the HME unit. Of course, one may prefer to use a previous soaked bed after its regeneration.

The dried air produced according to the present invention is very competitive to that obtained by refrigeration drying, requiring less equipment investment as well as lower operational costs.

While the invention will be hereinafter illustrated by a number of specific Examples, it should be understood, that these Examples are presented only for a better understanding of the invention without limiting its scope which is covered by the appended Claims.

**EXAMPLE 1.**

An amount of 10 m³/h of atmospheric air at 30°C and 80% relative humidity was compressed to 6.9 bar, thereby raising the temperature to 150°C. The compressed air contained 0.05% oil by volume.

It was required, to dry the compressed air to a dew point below -20°C.

The compressed air was first passed through a preprocessing stage, consisting of a small bed which contained active carbon.

The resulted air which contained less than 0.01 % oil was passed through a HME unit consisting of two beds, each containing 0.2 l of molecular sieve (4A) as desiccant, cycled at intervals of 10 minutes. The air product which was obtained at 41°C had a dew point of -26°C; a separate stream consisting of 9g/minute of condensed water also was obtained. No external power was supplied to the HME unit than what was needed to activate the controls.

3

## EXAMPLE 2.

An amount of 10 m³/h of atmospheric air at 30°C and 80% relative humidity had to be dried. The compressed air to 6.9 bar, raised its temperature to 150°C and contained 0.05% oil by volume.

It was required, to dry the compressed air to a dew point below -20°C, while eliminating also any oil entrained during the compression operation.

The compressed air was first preheated to 210°C, by means of a small heater (0.262 kW) and then fed to a catalytic converter (0.5 l).

The oil-free converter effluent, at a temperature of 220°C was then fed to a HME unit consisting of two desiccant beds, each containing 0.2 l of molecular sieve (4A), cycled at intervals of 10 minutes.

The oil-free air product effluent at 47°C was obtained having a dew point of -26°C. A separate stream of condensed water at a rate of 10g/min was intermitently extracted from the air tank.

## Claims

1. An apparatus for a rapid drying of compressed air, which comprises the steps of:
   (a) removal of the oil entrained in the stream of compressed air, and
   (b) passing the stream of oil-free air through a HME system consisting of a pair of adsorption/desorption beds, wherein cooling and condensation of the moisture occur,
   thus obtaining a substantially dry stream of air.

2. The apparatus according to Claim 1, wherein the air going out from step (a) is preheated prior to its entering in the HME (Heat-Mass-Exchange) system.

3. The apparatus according to Claim 1, wherein the removal of oil is carried out by adsorption over a desiccant.

4. The apparatus according to Claim 3, wherein the desiccant is selected from active carbon, activated alumina, silica gel, molecular sieve, or any mixture thereof.

5. The apparatus according to Claim 1, wherein the adsorption of the residual moisture in step (b) is carried out in a previously regenerated bed.

6. The apparatus according to Claim 1, wherein the removal of oil is carried out by a catalytic combustion unit.

7. The apparatus according to Claim 6, wherein the ignition temperature in said catalytic combustion unit is in the range of between 120° to 200°C.

8. The apparatus according to Claim 7, wherein the heat of combustion is used to preheat the air entering in the catalytic combustion unit.

Figure 1: Rapid (HMF) Drying

**European Patent Office**

## EUROPEAN SEARCH REPORT

Application Number

EP 93 40 2093

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,Y | EP-A-0 168 073 (LAVIE RAM)<br>* page 11, line 12 - page 12, line 25; figure 4B * | 1,5 | B01D53/26 |
| Y | US-A-5 087 178 (ROGERS MACHINERY COMPANY)<br>* column 2, line 16 - line 68; figure 1 * | 1,5 | |
| A | US-A-4 231 768 (PALL CORPORATION)<br>* column 9, line 51 - column 10, line 44; figures 1,2 *<br>* column 11, line 44 - line 64 *<br>* column 12, line 34 - column 14, line 18 * | 1,4,5 | |
| A | US-A-4 898 599 (PNEUMATIC PRODUCTS CORPORATION)<br>* column 4, line 35 - column 5, line 60; figure 1 * | 1,4,5 | |
| | | | TECHNICAL FIELDS SEARCHED (Int.Cl.5)<br><br>B01D |

The present search report has been drawn up for all claims

| Place of search | Date of completion of the search | Examiner |
|---|---|---|
| THE HAGUE | 7 December 1993 | Bogaerts, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)